# EUROPÄISCHE PATENTANMELDUNG

(11) **EP 0 891 893 A2**
(43) Veröffentlichungstag der Anmeldung: **20.01.1999**
(21) Anmeldenummer: 98106227.6
(22) Anmeldetag: 06.04.1998
(51) Int. Cl.: B60R 16/00

(54) **Schalteranordnung**

(30) Priorität: 10.04.1997 DE 19714955
(71) Anmelder: Bayerische Motoren Werke Aktiengesellschaft, 80788 München (DE)
(72) Erfinder: Ziebarth, Thomas, 81927 München (DE)

(57) **Zusammenfassung**

Schalteranordnung zum zentralen Bedienen einer Mehrzahl von Bauteilen oder Baugruppen eines Kraftfahrzeugs, mit einem eine sichtbare Oberseite aufweisenden Schaltfeld (3) mit einer Mehrzahl von aneinander angrenzenden Schaltabschnitten, welche mit elektrischen Kontakten (4) versehen sind, und einem Schaltelement (2), welches längs der sichtbaren Oberseite zu jedem der Schaltabschnitte hin derart verschiebbar ist, daß diese durch Kontaktieren der elektrischen Kontakte (4) schaltbar sind.

## Beschreibung

Die Erfindung betrifft eine Schalteranordnung zum zentralen Bedienen einer Mehrzahl von Bauteilen oder Baugruppen eines Kraftfahrzeugs.

Zum Bedienen von Bauteilen oder Baugruppen eines Kraftfahrzeugs werden im Allgemeinen Schalter eingesetzt, die sowohl im unmittelbaren Bereich der zu bedienenden Bauteile oder Baugruppen als auch in einer zentralen Position zum Bedienen der Bauteile oder Baugruppen angeordnet sind. Hierbei sind jeweils einem Schalter eine oder mehrere Bedienfunktionen eines bestimmten Bauteils oder einer bestimmten Baugruppe zugeordnet. Das heißt, daß zum Betätigen der Bauteile oder Baugruppen jeweils einzelne separate Schalter erforderlich sind, wobei die Schalter sequentiell bedient werden müssen. Bei räumlicher Nähe der Schalter zueinander kann eine parallele Bedienung mehrerer Bauteile oder Baugruppen nur auf komplizierte Weise erreicht werden, indem die Finger einer Hand einer Bedienperson auf mehrere Schalter ausgestreckt werden. Dies kann jedoch zu einer unzureichenden Betätigungskraft an den zur Betätigung beabsichtigten Schaltern bzw. zu einer unbeabsichtigten Betätigung von Schaltern oder einer bestimmten Bedienfunktion derselben führen, wodurch Fehlschaltungen verursacht werden können.

Es ist eine Aufgabe der Erfindung, eine Schalteranordnung zu schaffen, bei der mit einfachen Mitteln und geringem Fertigungsaufwand ein sicheres und zuverlässiges zentrales Bedienen einer oder mehrerer Bedienfunktionen von Bauteilen oder Baugruppen eines Kraftfahrzeugs einzeln, sequentiell oder parallel erreicht wird, wobei ein einfaches und schnelles Bedienen der Bauteile oder Baugruppen mit geringem Kraftaufwand ohne Auftreten von Fehlschaltungen möglich ist.

Erfindungsgemäß wird diese Aufgabe gelöst durch eine Schalteranordnung mit einem eine sichtbare Oberseite aufweisenden Schaltfeld mit einer Mehrzahl von aneinander angrenzenden Schaltabschnitten, welche mit elektrischen Kontakten versehen sind, und einem Schaltelement, welches längs der sichtbaren Oberseite zu jedem der Schaltabschnitte hin derart verschiebbar ist, daß diese durch Kontaktieren der elektrischen Kontakte schaltbar sind.

Erfindungsgemäß wird diese Aufgabe weiterhin gelöst durch eine Schalteranordnung mit einem eine sichtbare Oberseite aufweisenden Schaltfeld mit einer Mehrzahl von aneinander angrenzenden Druck- oder Berührungsschaltern, und einem zwischen zwei Umpolstellungen schaltbaren Schaltelement, welches mit jedem der Druck- oder Berührungsschalter in elektrischen Kontakt bringbar ist.

Eine derartige Schalteranordnung ermöglicht ein zentrales Bedienen einer Mehrzahl von Bauteilen oder Baugruppen, die jeweils einzeln oder in Kombination miteinander einem der Schaltabschnitte bzw. einem der Druck- oder Berührungsschalter zugeordnet werden können, wobei dem Schaltelement eine oder mehrere Bedienfunktionen der jeweiligen Bauteile oder Baugruppen zugeordnet werden können. Dabei können entweder die Bauteile oder Baugruppen mittels des jeweiligen Schaltabschnitts bzw. Druck- oder Berührungsschalters vorgewählt und die Bedienfunktion der jeweiligen Bauteile oder Baugruppen mittels des Schaltelements zugeschalten werden, oder die Bedienfunktion der jeweiligen Bauteile oder Baugruppen mittels des Schaltelements vorgewählt und die Bauteile oder Baugruppen mittels des jeweiligen Schaltabschnitts bzw. Druck- oder Berührungsschalters zugeschalten werden. Infolgedessen wird von dem Schaltelement und dem jeweiligen Schaltabschnitt bzw. Druck- oder Berührungsschalter ein elektrischer Kontakt ausgelöst, der bewirkt, daß die jeweilige Bedienfunktion der Bauteile oder Baugruppen des Kraftfahrzeugs ausgeführt wird.

Da die Schaltabschnitte bzw. die Druck- oder Berührungsschalter des Schaltfeldes aneinander angrenzen, wird nur ein geringer Einbauraum für die Schalteranordnung benötigt. Gleichzeitig ist eine kompakte Ausbildung des Schaltfeldes zusammen mit dem Schaltelement möglich.

Die erfindungsgemäße Schalteranordnung läßt nicht nur eine flexible Schaltung von Kombinationsmöglichkeiten für das Betätigen der Bauteile oder Baugruppen zu, sondern ermöglicht außerdem ein Erkennen der Lage der jeweiligen Bauteile oder Baugruppen aus der Lage des jeweils zugeordneten Schaltabschnitts bzw. Druck- oder Berührungsschalters innerhalb des Schaltfeldes, wodurch ein gute Übersichtlichkeit und ein schnelles Bedienen der Bauteile oder Baugruppen gewährleistet ist.

Die sichtbare Oberseite des Schaltfeldes kann in dem Kraftfahrzeug derart angeordnet sein, daß sie von einer Bedienperson deutlich erkennbar ist, wobei eine zusätzliche optische Kennzeichnung der Schaltabschnitte bzw. Druck- oder Berührungsschalter sowie des Schaltelements mit Hilfe von Beleuchtungsmitteln, die permanent oder nur während bestimmter Bedienvorgänge wirksam sind, zweckmäßig ist. Die Anordnung der Schaltabschnitte bzw. Druck- oder Berührungsschalter sowie des Schaltelements zueinander ermöglicht eine deutliche Fühlbarkeit durch die Bedienperson, so daß Fehlschaltungen vermieden werden und eine genaue Zuordnung des Schaltelements zu dem zu schaltenden Kontakt des jeweiligen Schaltabschnitts bzw. Druck-oder Berührungsschalters des Schaltfeldes erreicht wird.

Im Falle des Schaltfeldes mit den Schaltabschnitten kann in vorteilhafter Weise die Oberseite des Schaltfeldes eben ausgebildet sein, und das Schaltelement eine ebene Unterseite aufweisen, welche auf der Oberseite des Schaltfeldes aufliegt. Dadurch ist es möglich, das Schaltelement ohne großen Kraftaufwand auf der ebenen Oberseite des Schaltfeldes entlang zu dem gewünschten Schaltabschnitt hin zu verschieben, wobei die Verschiebewege des Schaltelements aufgrund der platzsparenden Ausbildung des Schaltfeldes kurz sind. Die Verschiebung des Schaltelements zu den Schaltabschnitten des Schaltfeldes hin kann entlang vorbestimmter Linien oder in beliebiger Weise erfolgen.

Nach einer vorteilhaften Ausführungsform der Erfindung können die Schaltabschnitte durch Überbrücken ihrer elektrischen Kontakte mittels des Schaltelemente schaltbar sein. Hierbei kann das Überbrücken der elektrischen Kontakte mechanisch erfolgen, wobei das Schaltelement mit entsprechenden Mitteln versehen ist, die mit den elektrischen Kontakten der jeweiligen Schaltabschnitte des Schaltfeldes in Eingriff bringbar sind.

Nach einer weiteren vorteilhaften Ausführungsform der Erfindung kann das Schaltelement mit elektrischen Kontakten versehen sein, die zum Schalten der Schaltabschnitte mit deren elektrischen Kontakten kontaktierbar sind. Dabei gelangen die jeweiligen elektrischen Kontakte des Schaltelemente und des Schaltabschnitts in direkten Kontakt miteinander, um den entsprechenden Betätigungsvorgang an den Bauteilen und Baugruppen auszulösen. Hierbei ist es zweckmäßig, das Schaltelement mittels eines zusätzlichen Führungselements zu dem jeweiligen Schaltabschnitt hin zu führen, um anschließend den elektrischen Kontakt herstellen zu können.

In vorteilhafter Weise können die Schaltabschnitte des Schaltfeldes mit Rastelementen zum Vorwählen der Bauteile oder Baugruppen versehen sein. Dies hat den Vorteil, daß das Schaltelement beim Verschieben zu dem jeweils gewünschten Schaltabschnitt des Schaltfeldes hin genau und zuverlässig in der Position des jeweiligen Schaltabschnitts einrasten und eine stabile fixierte Lage einnehmen kann. Dadurch ist eine bessere Bestimmung und Erkennung der Position des Schaltelemente auf dem Schaltfeld durch die Bedienperson möglich, wobei eine unbeabsichtigte Verschiebung des Schaltelemente durch Berührung desselben durch die Bedienperson besser vermieden wird.

Im Falle des Schaltfeldes mit den Druck- oder Berührungsschaltern kann das Schaltelement in das Schaltfeld integriert angeordnet sein. Das hat den Vorteil, daß das Schaltelement zusammen mit den Druck- oder Berührungsschaltern ein kompakte Einheit bildet und sowohl das Schaltelement als auch die Druck- oder Berührungsschalter nur in einer einzigen Richtung zu betätigen sind. Der Einsatz von Berührungsschaltern ist dabei besonders vorteilhaft, da diese keine große Betätigungskraft erfordern. Die in das Schaltfeld integrierte Anordnung des Schaltelements gewährleistet eine einfache Bedienbarkeit und benötigt als kompakter Block einen geringen Einbauraum.

Nach einer bevorzugten Ausführungsform der Erfindung kann das Schaltelement von den Druck- oder Berührungsschaltern des Schaltfeldes umgeben sein und nach oben vorstehen. Dadurch liegt jeder Druck- oder Berührungsschalter in unmittelbarer Nähe zu dem Schaltelement, wodurch eine übersichtliche Bedienbarkeit von der Position des Schaltelements zu den jeweiligen Druck- oder Berührungsschaltern hin gewährleistet ist. Die nach oben vorstehende Anordnung des Schaltelements ermöglicht eine deutliche Erkennbarkeit desselben durch die Bedienperson und vermeidet ein unbeabsichtigtes Berühren von Druck- oder Berührungsschaltern des Schaltfeldes beim Betätigen des Schaltelements.

Nach einer weiteren Ausführungsform der Erfindung kann das Schaltelement getrennt von dem Schaltfeld angeordnet sein. Das hat den Vorteil, daß eine gegenseitige Beeinflussung zwischen dem Schaltelement und dem Schaltfeld mit den Druck- oder Berührungsschaltern beim Betätigen derselben vermieden wird. Die Fläche des Schaltelements sowie der jeweiligen Druck- oder Berührungsschalter des Schaltfeldes kann dementsprechend großzügiger gestaltet werden, so daß Fehlbedienungen sowohl des Schaltelements als auch der Druck- oder Berührungsschalter vermieden werden.

In vorteilhafter Weise können die Druck- oder Berührungsschalter des Schaltfeldes als Vorwahlelemente ausgebildet sein. Das hat den Vorteil, daß nach dem Vorwählen der jeweiligen Bauteile oder Baugruppen die Bedienfunktion derselben durch Schalten des Schaltelements zwischen den zwei Umpolstellungen verändert werden kann.

Weiterhin ist es vorteilhaft, das Schaltelement als Doppeltaster oder Doppel-Berührungsschalter auszubilden. Dadurch können zwei unterschiedliche Bedienfunktionen, wie das Heben und Senken eines elektrischen Fensterhebers eines Kraftfahrzeugs, geschaltet werden. Hierbei ist kein Rückstellen des Schaltelements nach Beendigung des Betätigungsvorganges erforderlich, wie es beispielsweise bei einem Rastschalter der Fall ist, wodurch eine einfache Bedienbarkeit des Schaltelements gewährleistet ist.

Die Erfindung wird anhand von Ausführungsbeispielen näher erläutert, die aus der Zeichnung ersichtlich sind. In der Zeichnung zeigen:
Fig. 1 eine perspektivische Ansicht einer Schalteranordnung nach einer ersten Ausführungsform der Erfindung;
Fig. 2 eine perspektivische Ansicht einer Schalteranordnung nach einer zweiten Ausführungsform der Erfindung; und
Fig. 3 eine perspektivische Ansicht einer Schaltungsanordnung nach einer dritten Ausführungsform der Erfindung.

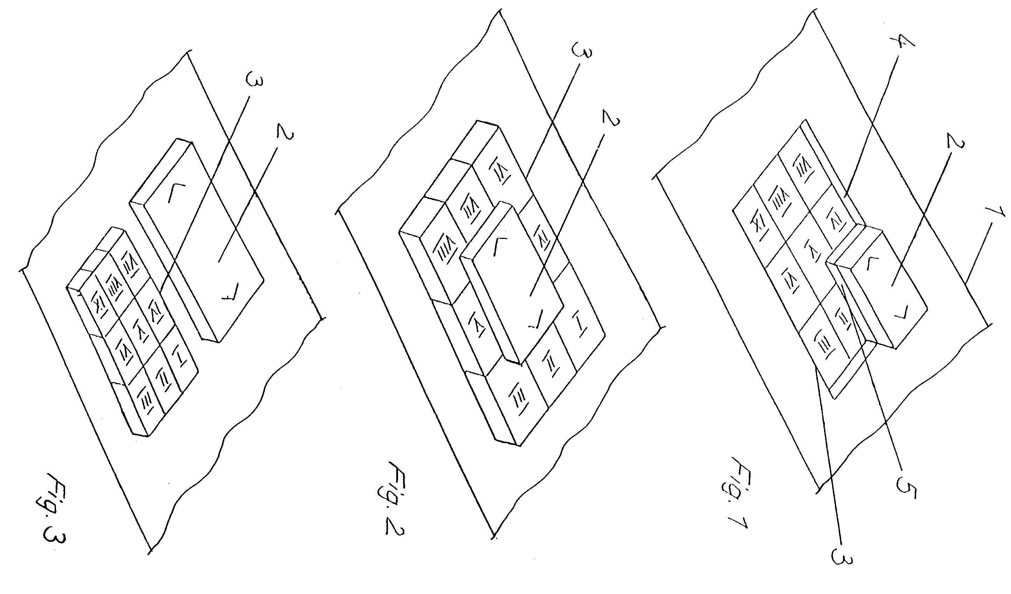

Aus Fig. 1 ist eine Schalteranordnung an einer Mittelkonsole 1 eines viertürigen Kraftfahrzeugs ersichtlich, die zum zentralen Bedienen von elektrischen Fensterhebern geeignet ist, wobei ein Schaltelement 2 auf einer ebenen Oberseite eines Schaltfeldes 3 verschiebbar angeordnet ist. Das Schaltfeld 3 weist neun aneinander angrenzende Schaltabschnitte auf und wird von vertikal zur ebenen Oberseite des Schaltfeldes 3 ausgerichteten elektrischen Kontakten 4 begrenzt. Das Schaltelement 2 ist an seinen Seitenflächen mit elektrischen Kontakten 5 versehen, die mit den elektrischen Kontakten 4 kontaktierbar sind. Die Schaltabschnitte des Schaltfeldes 3 sind mit nicht gezeigten Rastelementen versehen, mit denen das Schaltelement 2 in Eingriff bringbar ist.

Mittels der Schaltabschnitte des Schaltfeldes 3 sind die jeweiligen elektrischen Fensterheber einzeln oder in Kombination miteinander vorwählbar. Hierbei sind entsprechend der Lage der jeweiligen Fensterheber in dem Kraftfahrzeug dem Schaltabschnitt I der vordere linke Fensterheber, dem Schaltabschnitt III der vordere rechte Fensterheber, dem Schaltabschnitt VII der hintere linke Fensterheber und dem Schaltabschnitt IX der hintere rechte Fensterheber zugeordnet. Dem Schaltabschnitt II sind beide vordere Fensterheber, dem Schaltabschnitt IV beide linke Fensterheber, dem Schaltabschnitt V alle Fensterheber, dem Schaltabschnitt VI beide rechte Fensterheber und dem Schaltabschnitt VII beide hintere Fensterheber zugeordnet.

Das Schaltelement 2 ist als Doppeltaster ausgebildet, der zwischen zwei Umpolstellungen schaltbar ist, die dem Heben bzw. Senken der jeweiligen elektrischen Fensterheber zugeordnet sind. Das Schaltelement 2 ist zu jedem der Schaltabschnitte des Schaltfeldes 3 hin verschiebbar und mit dem Rastelement des jeweiligen Schaltabschnitts derart in Eingriff bringbar, daß die elektrischen Kontakte 5 des Schaltelements 2 mit den an den jeweiligen Schaltabschnitt angrenzenden elektrischen Kontakten 4 des Schaltfeldes 3 in Kontakt stehen.

Wie aus Fig. 1 ersichtlich ist, befindet sich das Schaltelement 2 in Eingriff mit dem Schaltabschnitt I, wobei die elektrischen Kontakte 5 des Schaltelements 2 mit den elektrischen Kontakten 4, die an den Schaltabschnitt I angrenzen und diesem zugeordnet sind, in Kontakt stehen, wodurch der vordere linke Fensterheber vorgewählt ist. Zum Heben bzw. Senken des Fensterhebers wird das Schaltelement 2 an der entsprechenden Seite niedergedrückt.

Da der Schaltabschnitt V keine angrenzenden elektrischen Kontakte 4 aufweist, wird ein elektrischer Kontakt mittels nicht gezeigten separaten Kontaktelementen zwischen dem Schaltelement 2 und dem Schaltabschnitt V des Schaltfeldes 3 hergestellt.

Durch logische Verknüpfung der elektrischen Kontakte 4 und 5 miteinander kann die dem Schaltabschnitt V zugeordnete Funktion auch derart vorgewählt werden, daß gar keine Kontaktierung der elektrischen Kontakte 4 und 5 miteinander erfolgt.

Aus Fig. 2 ist eine Schalteranordnung ersichtlich, wobei das Schaltelement 2 von dem Schaltfeld 3 umgeben ist, welches acht Druckschalter aufweist, die jeweils einem Fensterheber bzw. einer Kombination von Fensterhebern zugeordnet sind. Das Schaltelement 2 ist als Doppeltaster ausgebildet und steht nach oben vor.

Der jeweilige Fensterheber bzw. die jeweilige Kombination von Fensterhebern ist durch Drücken des entsprechenden Druckschalters des Schaltfeldes 3 vorwählbar und durch Niederdrücken des Schaltelements 2 an der entsprechenden Seite anhebbar bzw. absenkbar.

Fig. 3 zeigt eine weitere Ausführungsform der Erfindung, wobei das Schaltelement 2 getrennt von dem Schaltfeld 3 angeordnet ist, das neun Berührungsschalter aufweist, die jeweils einem Fensterheber bzw. einer Kombination von Fensterhebern zugeordnet sind. Hierbei ist das Schaltelement 2 als Doppel-Berührungsschalter ausgebildet.

Der jeweilige Fensterheber bzw. die jeweilige Kombination von Fensterhebern ist durch Berühren des entsprechenden Berührungsschalters des Schaltfeldes 3 vorwählbar und durch Berühren des Schaltelements 2 an der entsprechenden Seite anhebbar bzw. absenkbar.

Die Schalteranordnungen können im vorderen Bereich der Mittelkonsole 1 zwischen dem Fahrer und dem Beifahrer oder im hinteren Bereich der Mittelkonsole 1 zwischen den Fahrgästen auf dem Fondsitzen angeordnet sein, wobei die Fensterheber bzw. die Kombinationen von Fensterhebern von diesen Personen zentral bedient werden können. Bei allen Ausführungen können alle oder einige Schaltabschnitte mit einem kleinen Abstand voneinander nah beieinander angeordnet sein.

## Patentansprüche

1. Schalteranordnung zum zentralen Bedienen einer Mehrzahl von Bauteilen oder Baugruppen eines Kraftfahrzeugs, mit einem eine sichtbare Oberseite aufweisenden Schaltfeld (3) mit einer Mehrzahl von aneinander angrenzenden oder nah beieinander angeordneten Schaltabschnitten, welche mit elektrischen Kontakten (4) versehen sind, und einem Schaltelement (2), welches längs der sichtbaren Oberseite zu jedem der Schaltabschnitte hin derart verschiebbar ist, daß diese durch Kontaktieren der elektrischen Kontakte (4) schaltbar sind.

2. Schalteranordnung zum zentralen Bedienen einer Mehrzahl von Bauteilen oder Baugruppen eines Kraftfahrzeugs, mit einem eine sichtbare Oberseite aufweisenden Schaltfeld (3) mit einer Mehrzahl von aneinander angrenzenden oder nah beieinander angeordneten Druck- oder Berührungsschaltern, und einem zwischen zwei Umpolstellungen schaltbaren Schaltelement (2), welches mit jedem der Druck- oder Berührungsschalter in elektrischen Kontakt bringbar ist.

3. Schalteranordnung nach Anspruch 1, dadurch gekennzeichnet, daß die Oberseite des Schaltfeldes (3) eben ausgebildet ist, und das Schaltelement (2) eine ebene Unterseite aufweist, welche auf der Oberseite des Schaltfeldes (3) aufliegt.

4. Schaltungsanordnung nach Anspruch 1 oder 3, dadurch gekennzeichnet, daß die Schaltabschnitte durch Überbrücken ihrer elektrischen Kontakte (4) mittels des Schaltelements (2) schaltbar sind.

5. Schaltungsanordnung nach einem der Ansprüche 1 und 3, dadurch gekennzeichnet, daß das Schaltelement (2) mit elektrischen Kontakten (5) versehen ist, die zum Schalten der Schaltabschnitte mit deren elektrischen Kontakten (4) kontaktierbar sind.

6. Schaltungsanordnung nach einem der Ansprüche 4 und 5, **dadurch gekennzeichnet**, daß die Schaltabschnitte des Schaltfeldes (3) mit Rastelelementen zum Vorwählen der Bauteile oder Baugruppen versehen sind.

7. Schalteranordnung nach Anspruch 2, **dadurch gekennzeichnet**, daß das Schaltelement (2) in das Schaltfeld (3) integriert angeordnet ist.

8. Schaltungsanordnung nach Anspruch 7, **dadurch gekennzeichnet**, daß das Schaltelement (2) von den Druck- oder Berührungsschaltern des Schaltfeldes (3) umgeben ist und nach oben vorsteht.

9. Schalteranordnung nach Anspruch 2, **dadurch gekennzeichnet**, daß das Schaltelement (2) getrennt von dem Schaltfeld (3) angeordnet ist.

10. Schaltungsanordnung nach einem der Ansprüche 8 und 9, **dadurch gekennzeichnet**, daß die Druck- oder Berührungsschalter des Schaltfeldes (3) als Vorwahlelemente ausgebildet sind.

11. Schaltungsanordnung nach einem der vorhergehenden Ansprüche, **dadurch gekennzeichnet**, daß das Schaltelement (2) als Doppeltaster oder Doppel-Berührungsschalter ausgebildet ist.
